# EUROPÄISCHE PATENTSCHRIFT

(11) **EP 1 957 176 B1**
(45) Veröffentlichungstag und Bekanntmachung des Hinweises auf die Patenterteilung: **20.01.2010**
(21) Anmeldenummer: 06818903.4
(22) Anmeldetag: 29.11.2006
(51) Int. Cl.: B01D 35/31, B01D 35/30, F01M 11/03

(54) **WECHSELÖLFILTER MIT FEDERBETÄTIGTEM DORN FÜR ABLAUF**
EXCHANGEABLE OIL FILTER WITH SPRING-OPERATED PIN FOR DRAINAGE
FILTRE A HUILE REMPLACABLE DOTE D'UN MANDRIN D'EVACUATION ACTIONNE PAR RESSORT

(30) Priorität: 02.12.2005 DE 102005057710
(43) Veröffentlichungstag der Anmeldung: 20.08.2008
(73) Patentinhaber: AUDI AG, 85045 Ingolstadt (DE)
(72) Erfinder: STEMMER, Xaver, 85084 Reichertshofen (DE); JUNG, Michael, 85122 Hitzhofen (DE); HOLL, Jürgen-Albert, 85057 Ingolstadt (DE); BARTE, Stefan, 85051 Ingolstadt (DE)
(74) Vertreter: Patzelt, Heike Anna Maria
(86) Internationale Anmeldenummer: PCT/EP2006/011450
(87) Internationale Veröffentlichungsnummer: WO 2007/062821

(56) Entgegenhaltungen:
- WO-A-2004/087290
- DE-A1- 3 344 568
- DE-A1- 3 432 855
- DE-C1- 3 622 153

## Beschreibung

Die Erfindung betrifft eine Vorrichtung gemäß dem Oberbegriff des Patentanspruchs 1.

Brennkraftmaschinen von Kraftfahrzeugen weisen Wechselölfilter zur Reinigung des Öls auf, die mit der Brennkraftmaschine verbunden sind, sodass das Öl von der Brennkraftmaschine durch den Wechselölfilter hindurch und wieder zurück zur Brennkraftmaschine zirkulieren kann. Derartige Wechselölfilter weisen z.B. einen vollveraschbaren Filtereinsatz auf und werden meist in festen Intervallen zusammen mit dem Öl der Brennkraftmaschine gewechselt bzw. ausgetauscht. Hierzu weist der Wechselölfilter zum einfachen Austausch ein Gewinde auf, mit dem er in eine entsprechende Öffnung eines Ölfilteradapters am Motorblock einer Brennkraftmaschine eingesetzt und festgeschraubt werden kann. Zusätzlich werden Dichtringe zur Verbesserung der Dichtung vor dem Aufsetzen des Wechselölfilters eingesetzt. Ferner sind aus dem Stand der Technik Wechselölfilter bekannt, die einen Ablaufdorn aufweisen, zum Beispiel avs dem WO 2004/087290.

Nachteilig jedoch ist, dass im Motor beim Erneuern des Wechselölfilters im Rahmen eines Ölwechsels Restöl zurückbleibt.

Der Erfindung liegt daher die Aufgabe zugrunde, eine Vorrichtung bereitzustellen, bei der beim Erneuern des Wechselölfilters im Rahmen eines Ölwechsels kein Restöl im Motor zurückbleibt.

Die erfindungsgemäße Lösung dieser Aufgabe besteht in den kennzeichnenden Merkmalen des Hauptanspruchs. Vorteilhafte Ausgestaltungen der Erfindung beschreiben die Unteransprüche.

Die Erfindung beruht darauf, dass der federnd vorgespannte Dorn als Ventil wirkt, das während des Betriebs - also bei zirkulierendem Öl - einen Abfluss offen hält, durch den gereinigtes, vom Wechselölfilter kommendes Öl wieder zum Motor zurückgeführt wird, während ein insbesondere zu einer Ölpumpe führender Kanal und ein insbesondere zum Zylinderkurbelgehäuse führender Ablauf verschlossen sind. Wird jedoch der Wechselölfilter vom Ölfilteradapter getrennt bzw. herausgezogen, öffnet der als Ventil wirkende Dorn automatisch den zur Ölpumpe führenden Kanal und den zum Zylinderkurbelgehäuse führenden Ablauf, sodass eine erste Verbindung von dem Abfluss zum Ablauf und eine zweite Verbindung vom Kanal zum Ablauf freigegeben wird, sodass Restölbestände im Bereich des Abflusses und im Bereich des Kanals sowie innerhalb des Dorns selbsttätig, d.h. unter Einwirkung der Schwerkraft, ablaufen können.

Ein Ausführungsbeispiel der Erfindung wird im Folgenden anhand der Zeichnungen erläutert. Es zeigen:
- Fig. 1: in Schnittdarstellung einen Motorblock mit einem Ölfilterhalter, in den ein Dorn eingesetzt ist und an dem ein Wechselölfilter in seiner Montageposi- tion befestigt ist,
- Fig. 2: in Schnittdarstellung einen Motorblock mit einem Ölfilterhalter, in den ein Dorn eingesetzt ist, bei dem im Unterschied zu Fig. 1 ein Wechselölfilter zum Austausch gelöst ist, und
- Fig. 3: eine perspektivische Darstellung eines Dorns.

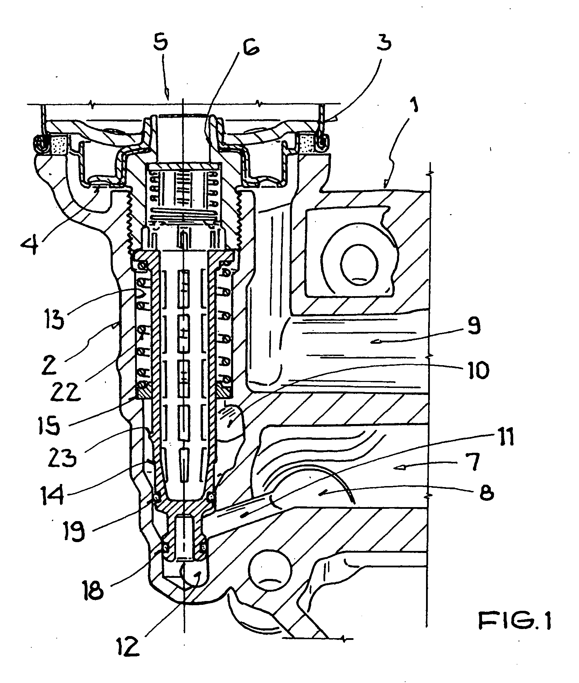

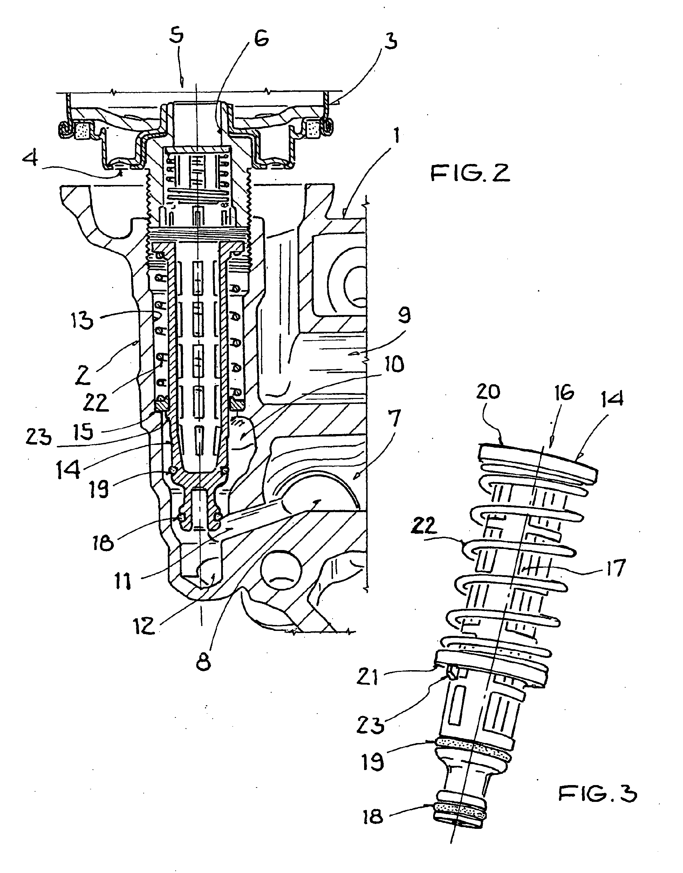

Es wird zunächst auf die Fig. 1 und 3 Bezug genommen.

Ein Motorblock 1 einer Brennkraftmaschine weist einen Ölfilteradapter 2 auf, der lösbar oder unlösbar an dem Motorblock 1 befestigt sein kann. An dem Ölfilteradapter 2 ist oberhalb des Motorblocks 1 ein Wechselölfilter 3 (abschnittsweise dargestellt) bspw. mittels eines Gewindes lösbar befestigt, der bspw. einen vollveraschbaren Filtereinsatz (nicht dargestellt) aufweist. Der Wechselölfilter 3 weist einen Einlass 4 und einen Auslass 5 auf, die beide nach unten gerichtet sind, wobei der Auslass 5 an einem in Einschraubeinrichtung vorstehenden Stutzen 6 angeordnet ist.

Der Motorblock 1 weist ferner einen ersten Raum 7 mit einem Zufluss 8 auf, der für zirkulierendes Öl eine Verbindung mit einer Ölpumpe (nicht dargestellt) herstellt. Ein zweiter Raum 9 des Motorblocks 1 ist oberhalb des ersten Raumes 7 angeordnet und stellt für das zirkulierende Öl eine Verbindung mit dem Einlass 4 des Wechselölfilters 3 her.

Der Ölfilteradapter 2 weist eine Aufnahme 13 auf, die einen ringförmig ausgebildeten Kragen 15 aufweist, auf dem ein in der Aufnahme 13 eingesetzter Dorn 14 ruht. Die Aufnahme 13 des Ölfilteradapters 2 weist einen Abfluss 10 auf, durch den vom Wechselölfilter 3 kommendes Öl zum Motor zurückgeführt werden kann. Unterhalb des Abflusses 10 ist ein Kanal 11 angeordnet, der eine Verbindung von der Aufnahme 13 zum ersten Raum 7 des Motorblocks 1 herstellen kann. Ferner weist die Aufnahme 13 des Ölfilteradapters 2 einen unterhalb des Kanals 11 angeordneten Ablauf 12 auf, der eine Verbindung mit einem Zylinderkurbelgehäuse (nicht dargestellt) herstellen kann.

Der Dorn 14 in der Aufnahme 13 besteht im Wesentlichen aus einem Grundkörper zylindrischer Form und weist einen Durchgang 16 auf, der für zirkulierendes Öl eine Verbindung mit dem Auslass 5 des Wechselölfilters 3 herstellt. Der Durchgang 16 des Dorns 14 steht mit einer Vielzahl von schlitzartig ausgebildeten Radialöffnungen 17 in Verbindung, sodass Öl aus dem Auslass 5 des Wechselölfilters 3 durch den Durchgang 16 und die Radialöffnungen 17 des Dorns 14 zum Abfluss 10 strömen kann.

An seinem unteren Ende (siehe Fig. 3) weist der Dorn 14 eine erste Dichtung 18 und eine zweite Dichtung 19 auf, wobei die erste Dichtung 18 des Dorns 14 und die Aufnahme 13 derart ausgebildet ist, dass in der in Fig. 1 dargestellten Montageposition der Kanal 11 verschlossen ist. Ferner ist die zweite Dichtung 19 und die Aufnahme 13 derart ausgebildet, dass in der in Fig. 1 dargestellten Montageposition der Ablauf 12 verschlossen ist.

Der Dorn 14 (siehe Fig. 3) weist an seinem oberen Ende eine Kontaktfläche 20 auf und darunter angeordnet eine ringförmig ausgebildete Anlagefläche 21. Zwischen der Kontaktfläche 20 und der Anlagefläche 21 des Dorns 14 ist eine Schraubenfeder 22 angeordnet, die derart mit der Kontaktfläche 20 und der Anlagefläche 21 in Wirkverbindung steht, dass durch Verringerung des Abstand zwischen der Kontaktfläche 20 und der Anlagefläche 21 die Schraubenfeder 22 zusammengedrückt werden kann. Die Schraubenfeder 22 kann bspw. einen Durchmesser von 23 x 2 mm aufweisen. Anstelle der Schraubenfeder 22 können jedoch auch andere geeignete Federelemente Verwendung finden. Ferner weist der Dorn 14 drei am Umfang der Anlagefläche 21 gleichmäßig beabstandet angeordnete Anschlagmittel 23 auf, die nasenförmig ausgebildet sind und in der in Fig. 3 gezeigten Positionen an der Anlagefläche 21 anliegen und eine weitere Entspannung der Schraubenfeder 22 verhindern.

In der Montageposition (siehe Fig. 1) steht die Kontaktfläche 20in Kontakt mit dem Stutzen 6 des Wechselölfilters 3, während die ringförmige Anlagelagefläche 21 mit dem entsprechenden Kragen 15 in Eingriff steht. In dieser Montageposition ist die Schraubenfeder 22 zusammengedrückt, sodass die Schraubenfeder 22 federnd vorgespannt ist, bspw. mit 15 mm.

Während des Betriebs - bei verschlossenem Kanal 11 und verschlossenem Ablauf 12 - strömt das unter einem Druck p₁ stehende Öl aus dem Zufluss 8, bspw. von einer Ölpumpe kommend, in den ersten Raum 7, von dem das Öl bspw. durch einen Ölkühler (nicht dargestellt) geleitet wird. Von dem Ölkühler kommend strömt das unter einem Druck p₂ stehende Öl in den zweiten Raum 9, von dem es durch den Einlass 4 in den Wechselölfilter 3 geleitet wird. Das den Wechselölfilter 3 durch den Auslass 5 verlassende Öl steht unter einem Druck p₃, wobei für das Größenverhältnis der Drücke p₁ bis p₃ p₃<p₂<p₁ gilt. Vom Auslass 5 des Wechselölfilters 3 strömt das zirkulierende Öl abwärts durch den Dorn 14 mit seinem Durchgang 16 und den Radialöffnungen 17 in den Abfluss 10, und wird dann zum Motor geleitet.

Es wird nun zusätzlich auf die Fig. 2 Bezug genommen.

Wird der Wechselölfilter 3 gelöst, wozu bspw. mehrere Umdrehungen nötig sind, wird die in Fig. 2 gezeigte Position des Wechselölfilters 3 erreicht. In dieser Position entspannt sich die Schraubenfeder 22 des Dorns 14, sodass in Abschraubrichtung des Wechselölfilters 3 der Dorn 14 automatisch axial verschoben wird.

Als Folge dieser Bewegung verschließt die erste Dichtung 18 des Dorns 1 nicht mehr den Kanal 11, sodass sich Restöl, dass sich im Kanal 11 und/oder sich im ersten Raum 7 befindet, selbsttätig zum Ablauf 12 gelangen kann, der ebenfalls durch diese Bewegung geöffnet wird. Die zweite Dichtung 19 verschließt ferner als Folge dieser Bewegung nicht mehr den Abfluss 10, sodass Restöl, dass sich im Abfluss 10 befindet, ebenfalls selbsttätig an der geöffneten ersten Dichtung 18 vorbei zum Ablauf 12 gelangen kann. Ferner kann Restöl, dass sich in der Aufnahme 13 bzw. sich im Inneren des Dorns 14, bspw. im Durchgang 16, befindet, selbsttätig durch den Ablauf 12 ablaufen, durch den das Restöl in das Zylinderkurbelgehäuse (nicht dargestellt) gelangen kann. Wenn das Restöl abgelaufen ist, kann der Wechselölfilter 3 abgenommen werden.

Abschließend wird ein neuer Wechselölfilter 3 aufgesetzt und festgedreht, sodass wieder die in Fig. 1 gezeigte Position erreicht ist. Der Dorn 1 ist so ausgelegt, dass beim Aufsetzen des neuen Wechselölfilters 3 zunächst etwa 2 Umdrehungen des Gewindes greifen und dann - beim weiteren Aufdrehen - die Stirnfläche des Stutzen 6 den Dorn 1 berührt und anschließend die Verlagerung des Dorns 1 gegen die Feder 22 erfolgt.

### BEZUGSZEICHENLISTE

- 1: Motorblock
- 2: Ölfilteradapter
- 3: Wechselölfilter
- 4: Einlass
- 5: Auslass
- 6: Stutzen
- 7: erster Raum
- 8: Zufluss
- 9: zweiter Raum
- 10: Abfluss
- 11: Kanal
- 12: Ablauf
- 13: Aufnahme
- 14: Dorn
- 15: Kragen
- 16: Durchgang
- 17: Radialöffnung
- 18: erste Dichtung
- 19: zweite Dichtung
- 20: Kontaktfläche
- 21: Anlagefläche
- 22: Schraubenfeder
- 23: Anschlagmittel

## Patentansprüche

1. Vorrichtung zum Filtern von in einer Brennkraftmaschine zirkulierendem Öl, umfassend einen Ölfilteradapter (2) zum lösbaren Befestigen eines Wechselölfilters (3) an einem Motorblock (1) der Brennkraftmaschine, **dadurch gekennzeichnet, dass** der Ölfilteradapter (2) eine Aufnahme (13) mit einem eingesetzten Dorn (14) aufweist, wobei die Aufnahme (13) einen Abfluss (10) zur Rückführung von aus dem Wechselölfilter (3) strömenden Öls aufweist, die Aufnahme (13) einen insbesondere zu einer Ölpumpe führenden Kanal (11) aufweist, und die Aufnahme (13) einen insbesondere zu einem Zylinderkurbelgehäuse führenden Ablauf (12) aufweist, wobei der Dorn (14) derart federnd vorgespannt eingesetzt ist, dass während des Betriebs der Dorn (14) den Abfluss (10) freigibt und den Kanal (11) und den Ablauf (12) verschließt und beim Lösen des Wechselölfilters (3) vom Ölfilteradapter (2) der Dorn (14) durch die Federkraft verschoben wird und den Abfluss (10), den Kanal (11) und den Ablauf (12) freigibt.

2. Vorrichtung nach Anspruch 1, **dadurch gekennzeichnet, dass** im eingesetzten Zustand der Dorn (14) beim Lösen des Wechselölfilters (11) axial in Richtung der Lösebewegung verschiebbar ist.

3. Vorrichtung nach Anspruch 1 oder 2, **dadurch gekennzeichnet, dass** die Federkraft von einer Schraubenfeder (22) bereitgestellt wird.

4. Vorrichtung nach einem der Ansprüche 1 bis 3, **dadurch gekennzeichnet, dass** der Dorn (14) an eine Auflagefläche (21) aufweist, die zum Zusammenwirken mit einem Stutzen (6) des Wechselölfilters (3) ausgebildet ist.

5. Vorrichtung nach einem der Ansprüche 1 bis 4, **dadurch gekennzeichnet, dass** der Dorn (14) eine erste Dichtung (18) aufweist, die während des Betriebs zwischen dem Kanal (11) und dem Ablauf (12) angeordnet ist und dass der Dorn (14) eine zweite Dichtung (19) aufweist, die während des Betriebs zwischen dem Abfluss (10) und dem Kanal (11) angeordnet ist.

6. Vorrichtung nach einem der Ansprüche 1 bis 5, **dadurch gekennzeichnet, dass** der Abfluss (10) oberhalb des Kanals (11) angeordnet ist und das der Kanal (11) oberhalb des Ablaufs (12) angeordnet ist.

7. Vorrichtung nach einem der Ansprüche 1 bis 6, **dadurch gekennzeichnet, dass** bei freigegebenem Abfluss (10), Kanal (11) und Ablauf (12) Öl im Wesentlichen selbsttätig ablaufen kann.

8. Dorn, der zur Verwendung in einer Vorrichtung nach einem der Ansprüche 1 bis 7 ausgebildet ist.

## Claims

1. Device for filtering oil circulating in an internal combustion engine, comprising an oil filter adapter (2) for detachably fastening an exchangeable oil filter (3) to an engine block (1) of the internal combustion engine, **characterised in that** the oil filter adapter (2) has a receptacle (13) with an inserted pin (14), the receptacle (13) having a discharge channel (10) for recirculating oil flowing from the exchangeable oil filter (3), the receptacle (13) having a channel (11) leading, in particular, to an oil pump, and the receptacle (13) having a drainage channel (12) leading, in particular, to a cylinder crankcase, the pin (14) being inserted in a resiliently pretensioned manner such that, during operation, the pin (14) opens the discharge channel (10) and closes the channel (11) and the drainage channel (12) and, upon detachment of the exchangeable oil filter (3) from the oil filter adapter (2), the pin (14) is displaced by the spring force and opens the discharge channel (10), the channel (11) and the drainage channel (12).

2. Device according to Claim 1, **characterised in that,** in the inserted state, the pin (14) is displaceable axially, upon detachment of the exchangeable oil filter (11), in the direction of the detachment movement.

3. Device according to Claim 1 or 2, **characterised in that** the spring force is made available by a helical spring (22).

4. Device according to any one of Claims 1 to 3, **characterised in that** the pin (14) has an abutment face (21) which is configured to collaborate with a connection piece (6) of the exchangeable oil filter (3).

5. Device according to any one of Claims 1 to 4, **characterised in that** the pin (14) has a first seal (18) which during operation is arranged between the channel (11) and the drainage channel (12), and **in that** the pin (14) has a second seal (19) which during operation is arranged between the discharge channel (10) and the channel (11).

6. Device according to any one of Claims 1 to 5, **characterised in that** the discharge channel (10) is arranged above the channel (11) and **in that** the channel (11) is arranged above the drainage channel (12).

7. Device according to any one of Claims 1 to 6, **characterised in that,** upon opening of the discharge channel (10), the channel (11) and the drainage channel (12), oil can drain substantially automatically.

8. Pin which is configured for use in a device according to any one of Claims 1 to 7.

## Revendications

1. Dispositif destiné à filtrer de l'huile circulant dans un moteur à combustion interne, comprenant un adaptateur de filtre à huile (2) pour la fixation amovible d'un filtre à huile remplaçable (3) sur un bloc moteur (1) du moteur à combustion interne, **caractérisé en ce que** l'adaptateur de filtre à huile (2) présente un logement (13) avec une broche (14) insérée, sachant que le logement (13) présente un écoulement (10) pour le recyclage de l'huile s'écoulant du filtre à huile remplaçable (3), que le logement (13) présente un canal (11) conduisant en particulier vers une pompe à huile, et que le logement (13) présente une évacuation (12) conduisant en particulier vers un carter moteur, la broche (14) étant insérée de façon précontrainte par ressort de telle sorte que pendant le fonctionnement, la broche (14) libère l'écoulement (10) et ferme le canal (11) et l'évacuation (12) et lors de la désolidarisation du filtre à huile remplaçable (3) de l'adaptateur de filtre à huile (2), la broche (14) est déplacée par la force ressort et libère l'écoulement (10), le canal (11) et l'évacuation (12).

2. Dispositif selon la revendication 1, **caractérisé en ce qu'**à l'état inséré, la broche (14), lors de la désolidarisation du filtre à huile remplaçable (11), peut être déplacée axialement dans le sens du mouvement de libération.

3. Dispositif selon la revendication 1 ou 2, **caractérisé en ce que** la force ressort est mise à disposition par un ressort hélicoïdal (22).

4. Dispositif selon l'une quelconque des revendications 1 à 3, **caractérisé en ce que** la broche (14) présente une surface d'appui (21), qui est conçue pour coopérer avec un raccord (6) du filtre à huile remplaçable (3).

5. Dispositif selon l'une quelconque des revendications 1 à 4, **caractérisé en ce que** la broche (14) présente un premier joint (18), qui est agencé pendant le fonctionnement entre le canal (11) et l'évacuation (12) et **en ce que** la broche (14) présente un deuxième joint (19), qui est agencé pendant le fonctionnement entre l'écoulement (10) et le canal (11).

6. Dispositif selon l'une quelconque des revendications 1 à 5, **caractérisé en ce que** l'écoulement (10) est agencé au-dessus du canal (11) et **en ce que** le canal (11) est agencé au-dessus de l'évacuation (12).

7. Dispositif selon l'une quelconque des revendications 1 à 6, **caractérisé en ce que** lorsque l'écoulement (10), le canal (11) et l'évacuation (12) sont libérés, l'huile peut s'écouler de manière essentiellement automatique.

8. Broche qui est réalisée pour être utilisée dans un dispositif selon l'une quelconque des revendications 1 à 7.
